# EUROPÄISCHE PATENTSCHRIFT

(11) **EP 2 176 120 B1**
(45) Veröffentlichungstag und Bekanntmachung des Hinweises auf die Patenterteilung: **21.09.2011**
(21) Anmeldenummer: 08756850.7
(22) Anmeldetag: 03.07.2008
(51) Int. Cl.: B63H 9/10, B63B 15/02

(54) **ROLLREFFBAUM FÜR SEGELSCHIFFE**
ROLLER REEFING BOOM FOR SAILING SHIPS
BÔME ENROULEUSE POUR PRISE DE RIS POUR VOILIERS

(30) Priorität: 10.07.2007 AT 10702007
(43) Veröffentlichungstag der Anmeldung: 21.04.2010
(73) Patentinhaber: Waldhauser, Kurt, 8302 VASOLDSBERG (AT); Waldhauser, Volker, 8101 Gratkorn (AT)
(72) Erfinder: Waldhauser, Kurt, 8302 VASOLDSBERG (AT); Waldhauser, Volker, 8101 Gratkorn (AT)
(74) Vertreter: Babeluk, Michael
(86) Internationale Anmeldenummer: PCT/AT2008/000241
(87) Internationale Veröffentlichungsnummer: WO 2009/006658

(56) Entgegenhaltungen:
- SU-A1- 1 512 858
- US-A- 3 310 017
- US-A- 4 261 276
- US-A- 4 733 624
- US-B1- 6 371 037

## Beschreibung

Die Erfindung betrifft einen Rollreffbaum, welcher aus mehren Segmenten besteht, welche in horizontaler Ebene gegeneinander verkippbar sind und in Längsrichtung einen etwa kreisrunden anteiligen Segelbergeraum einschließen, gemäß dem Oberbegriff des Anspruches 1.

### Stand der Technik

Herkömmliche Segelbäume, insbesondere Großsegelbäume, werden gerade ausgeführt, wobei das Segel entweder in einer Keep mit dem gesamten Unterliek geführt und gehalten oder mit freiem Unterliek nur mastseitig und an der Baumnock gehalten wird. Um ein dem Wind angepasstes strömungsgünstiges Profil zu erhalten, werden aus verschiedensten Materialien in drei Dimensionen bauchig geformte Segel verwendet, welche mit vorzugsweise horizontalen, jedoch auch mit vertikalen verschiedenst geformten Segellatten derart ausgesteift werden, dass die hintere Ausstellung des Segels maximal vergrößert werden kann und dadurch im Verhältnis zur Vorliek- und Unterlieklänge eine größere Segelfläche und somit Windangriffsfläche erreicht wird.

Da das übliche händische Segelreffen bzw. -bergen vor allem bei größeren Schiffen sehr kraftaufwändig ist, ist man in den letzten Jahrzehnten dazu übergegangen, die Segel entweder in einen hohlen Mast oder in den hohlen Baum hinein mechanisch aufzurollen. Nachteil hierbei ist, dass in drei Dimensionen profilierte, bauchige, also aerodynamisch günstig geschnittene Segel aufgrund der partiell unterschiedlichen aufzurollenden Tuchlängen nicht korrekt aufzurollen sind und im gerefften, also teilweise aufgerolltem Zustand sich verziehen und einen schlechten Stand und somit schlechte Segeleigenschaften aufweisen.

Flach geschnittene Segel, wie sie für Rollreffbäume als Abhilfe verwendet werden, auch mit horizontalen Segellatten welche mit aufrollbar sind, haben durch das gerade Unterliek und der Flachheit wegen eine aerodynamisch ungünstige Form und somit wiederum schlechtere Segeleigenschaften vor allem bei Schwachwind, wo bauchig profilierte Segel notwendig sind.

Um die Nachteile des schlechten Segelstandes und somit der schlechten Segeleigenschaften zu verbessern, gab es in den letzten Jahrzehnten Entwicklungsvorschläge.

Es handelt sich hier ausschließlich um Verbesserungen des Segelstandes von konventionellen händisch reffbaren Segeln (Bindereff) durch Vorrichtungen, die die Unterliekskrümmung gegenüber einem geraden Segelbaum verbessern. Z.B. "Boisson FR2472508 und FR2557064", hier muss der Segelbaum samt erfindungsgemäßer Ausstellvorrichtung bei jeder Wende nachteilig um 180° verdreht werden, wie z.B. auch bei "Palmblad DE371790" Eine oberbegriffsmäßige Rollreff baum ist aus dem Dokument US6 371 037 bekannt

Als Würdigung des Standes der Technik sind weiter anzuführen: Darzinskis US4261276, Vicard FR2199722, Larsson CH615631.

In keinem der Fälle handelt es sicher hier um die Lösung von vorhandenen Segelstandsproblemen die bei Rollreffanlagen auftreten, die hier im Folgenden einer Lösung zugeführt werden.

### Beschreibung der Erfindung

Ziel der Erfindung wie beschrieben in den Ansprüchen 1 und 8, es, eine weitgehendst automatisierbare Baumsegel-Rollreffanlage, z.B. für ein Großsegel, zu schaffen, die von Hand über Seilzüge, wie es für kleinere Schiffe üblich ist, oder für größere elektrisch bzw. hydraulisch vom Steuerstand aus betrieben werden kann, die ein sicheres Setzen und Bergen eines beliebig weit ausgestellten Lattenbaumsegels ermöglicht, das sowohl bei Schwachwind ein tiefes aerodynamisch einwandfreies Profil über die ganze Länge des Segels von oben bis unten komplett ausgeschüttet aufweist, als auch bei zunehmender Windstärke im Reffzustand ein gewolltes Reduzieren der Profiltiefe ermöglicht mit der gleichen Profilcharakteristik, jedoch flacher getrimmt.

Um auch die gesamte Segelfläche eines Lattengroßsegels in allen Höhen auf optimal mögliche Antriebsleistung zu bringen, muss auch ein optimiertes, vorbestimmtes Segelprofil ausgebildet werden können, das ganz bis nach unten vollflächig wirksam ist.

Ein samt Latten faltenfrei und verzuglos aufrollbares Segel kann nur über den gesamten Reffbereich plan konfektioniert sein mit zum Wickeldorn parallelen Latten. Oberhalb des Reffbereiches, etwa in der halben Gesamthöhe des Segels, kann allmählich auf ein schwaches eingearbeitetes Segelprofil im Toppbereich übergegangen werden. Dieser Bereich wird in der Praxis nicht mehr gerefft, sondern das gesamte Segel geborgen.

Um das notwendige vorbestimmte Segelprofil samt Tiefenverstellbarkeit auf das Segel zu übertragen, wird der gesamte Rollreffbaum aus mehreren Segmenten der Länge nach aufgebaut, die gegeneinander horizontal in beide Richtungen verkippbar sind und mechanisch gesteuert die Profilcharakteristik einnehmen, wobei die Profiltiefe von 0 bis maximal mechanisch, je nach vorherrschender Windstärke, stufenlos einjustierbar ist und für beide Seiten jeweils zugleich einstellbar sein muss, da dies beim Aufkreuzen gegen den Wind notwendig ist.

Nach jeder Wende geht das vorfixierte Baumprofil selbsttätig durch den Winddruck in das gegengleiche Profil samt der momentan eingestellten Profiltiefe über, sodass am neuen Bug ähnliche Trimmverhältnisse herrschen wie vor der Wende.

Der Rollreffbaum besteht wie gesagt aus mehreren speziell ausgebildeten Segmentteilen, die je einen Segelbergeraumanteil großteils rohrförmig umschließen, einem Kopfsegment lümmelseitig, einem Nocksegment am achteren Ende und dazwischen mehrere gleichartige Mittelsegmente.

Alle Segmente sind an ihren gegenseitigen Berührungsstellen vorzugsweise mit hartmetallbestückten Kipplagern versehen, deren vertikale Kippachsen durch das Mittel der Segelbergeräume gehen.

An oberster und an unterster Stelle der Rollreffsegmente sind diese in Längsrichtung durchsetzend vorteilig mit einem oberen und einem unteren vorgespannten elastisch ummantelten Zugstrang versehen, die am Kopfssegment bzw. am Nocksegment befestigt sind und den mechanischen Zusammenhalt der Rollreffanlage bilden, ein horizontales Auslenken der Segmentteile zu beiden Seiten hin ermöglichen, jedoch in vertikaler Ebene die nötige Biegesteifigkeit gewährleisten.

Sowohl das Kopfsegment als das Nocksegment sind an ihren äußeren Enden mit einer ausgeformten Abschlussplatte endbegrenzt, die als Lagerschild für einen vorzugsweise mit Tellerfedern vorgespannten runden Zugstab dienen, der durch das Mittel der Segelbergeräume aller Segmentteile in gerade gestellter Position hindurch geht.

Über diesen gespannten Zugstab, der bevorzugter Weise aus einem dünnen biegsamen Edelstahlrohr besteht, befindet sich drehbar gelagert ein Wickeldorn zum Aufrollen des Lattengroßsegels, dessen Lagerung, da zugentlastet, leichtgängig drehbar ist, was für kleinere händisch betriebene Baumreffanlagen entscheidend ist.

Ein möglicher hydraulischer oder elektrischer Antrieb benötigt dieser Art weniger Leistung und Gewicht, was auf einem Segelschiff erhebliche Bedeutung hat.

Der Wickeldorn einerseits muss horizontal biegsam die notwendigen Kurven des Segelprofils ermöglichen, andererseits muss er das Drehmoment des Wickelantriebes von einer Seite aus derart über die gesamte Länge übertragen, dass das Vorliek und das Achterliek möglichst zugleich aufgerollt werden kann.

Zudem soll eine gewisse Menge an dicht aufgerolltem Segeltuch, wie es der jeweilige Reffvorgang erfordert, also der gereffte, aufgerollte Segeltuchballen, eine entsprechend verminderte Profilgebung zulassen.

Von Schwachwind an bis etwa vier Beaufort Windstärke herrscht im allgemeinen Vollzeugbriese bei ungerefften Segeln. Die Profiltiefe des Lattengroßsegels variiert hierbei von großer Tiefe bei Schwachwind bis stark abgeflacht. Je nach Rankheit des Schiffes muss bei weiter schreitendem Auffrischen des Windes die Profiltiefe zurückgenommen und die Segelfläche reduziert werden. Das heißt, je dicker der weggereffte Segelballen ist, desto weniger bis keine Profilgebung ist notwendig.

Um jedoch einen Wickeldorn samt einigen aufgewickelten Segeltuchlagen, die nur wenig elastisch dehnbar sind, mit geringem Kraftaufwand genügend verkrümmen zu können, wird die Oberfläche des Wickeldornes vorteilig mit spiralförmigen Freistellungen versehen, die sowohl ein geringfügiges unbeengtes Dehnen an der Außenseite als auch ein Zusammenstauchen mit ausweichender Knitterbildung auf der Biegungsinnenseite der gekrümmten Segeltuchlagen erlauben.

Der erfindungsgemäße Wickeldorn wird außen mit einer vorzugsweise zwei- bis dreigängigen Gewindespirale mit trapezgewindeähnlichem Querschnitt ausgestattet, der etwa gleich viel Oberflächenanteil an freistellenden Zwischenräumen als an tragender Oberfläche der Gewindekörper aufweist.

Diese Gewindekörperspiralen werden vorzugsweise aus dehnungsarmem Faserplast über ein Trägerrohr in geeigneter Dimension aus biegsamem gewickeltem, jedoch druckfestem Faserplast in Form besagter Gewindespiralen kleberverbunden aufgebracht, wobei der Gewichtsanteil von Trägerrohr und aufgebrachtem Material der Gewindegänge auch etwa 50 % betragen kann.

Aufgrund der zu erzielenden Resistenz des Trägerrohres gegen Zusammendrücken und Dehnungsarmut der homogen verbundenen Gewindeumschlingungen, resultiert ein ausreichend gut biegsamer jedoch torsionssteifer Wickeldorn mit allen vorgenannten Eigenschaften.

Um die Profilgebung des Rollreffbaumes zu kontrollieren und zu steuern, sind zwei unterschiedliche mechanische Einrichtungen vorgesehen:
Die voreinstellbare Zwangssteuerung der Profilcharakteristik aufgrund aerodynamischer Erkenntnisse, die als Grundeinstellung permanent in der Anlage verbleiben und die zu bedienende Verstelleinrichtung der Profiltiefe.
Die Einstellung der optimalen Profiltiefe des Segels je nach Windstärke erfolgt durch eine Geradstellungseinrichtung, die vorzugsweise aus zwei elektrobetriebenen Kleingetriebemotoren besteht, die jeweils eine Gewindespindel treiben, die ihrerseits je einen elastischen Zugstrang aus vorzugsweise glasfaserverstärktem Plast, mit dem sie mechanisch verbunden sind, einziehen oder ausschieben.
Die Zugstränge befinden sich in Längsrichtung jeweils innerhalb der Außenwand knapp unter dem Segelbergeraum zu beiden Seiten der Rollreffbaumsegmente innerhalb einer elastischen Schutzhülle längsverschiebbar angeordnet.

Wenn beispielsweise der Rollreffbaum über seine Kipplager auf eine Seite auslenkt, verkürzt sich die Kurveninnenlänge aller Segmente, wogegen sich die Außenlängen um das gleiche Maß verlängern. Das freie achterliche Ende der Zugstränge hat je einen verdickten Endanschlag, mit dem es aus einer Halterungsöse der Nocksektion im Falle der Innenkurve hervorstehen, aber im Falle der Außenkurve nicht hindurchschlüpfen und auf Zug gehen muss.

Wird nun an beiden Geradstellungssträngen gleichzeitig mittels der Gewindespindelmotoren und auch im gleichen Maße gezogen, so mittelt sich der Baum zwischen den Strängen gerade ein. Gleichermaßen würde das Lockern eines Stranges bei gleichzeitigem Zug auf dem anderen eine entsprechende Baumauslenkung hervorrufen.

Ein teilweises oder gänzliches Öffnen der Zugstrangwege im gleichen Maße gibt dem Rollreffbaum eine ganz bestimmte Bewegungsfreiheit und ermöglicht dem Rollreffbaum nach einer Wende das gleiche bereits einjustierte Profil am anderen Bug neuerlich einzunehmen, was beim Aufkreuzen gegen den Wind vorteilig ist und unnötige Justierarbeit erspart.

Die Zwangssteuerung hingegen ist eine notwendige erfindungsgemäße Einrichtung des Rollreffbaumes das Auslenken ihrer Teilsegmente immer im gleichen voreingestellten Verhältnis zueinander derart zu steuern, dass ein vorberechenbarer optimierter aerodynamischer Kurvenverlauf des von ihm geführten Segels zwingend eingenommen werden muss, unabhängig davon, welche Profiltiefe aufgrund der momentanen Windstärke einjustiert wurde.

Das gegenseitige Steuern der Auslenkbewegungen kann in einer möglichen Ausführungsform durch Verbindungsstangen, die die Teilsegmente miteinander in erfindungsgemäßen Verhältnissen gelenkig verbinden erfolgen oder in der bevorzugten Ausführungsform mittels biegsamer Zugstränge.

Vorzugsweise wird die Zwangssteuerung mittels zweier vorgespannter biegsamer rostfreier Stahlseile ausgeführt, die in erfindungsmäßiger Verbindungsart zwischen den Teilsegmenten in Klemmhaltern fixiert die Auslenkwinkel der Teilsegmente zueinander in vorbestimmbaren Verhältnissen festlegt.

Die Seilzüge müssen unmittelbar unter dem rohrförmigen Segelbergeraum verlaufen, da jedes Teilsegment mit dem übernächsten des Rollreffbaumes durch gekreuzte Seilstränge in ziehender Verbindung steht und somit jedes zweite Segment über die Kipplager, die den entsprechenden Gegendruck aufnehmen, in die entsprechende Kurvenlage zwingt.

Die dazwischen befindlichen Glieder werden mit einem zweiten Seil gleichartig zwangsgesteuert, wobei dieses die Segmente mit den gekreuzten Seilen an der Innenseite der Außenwand mittels geeigneter Klemmhalter fixiert gerade durchläuft, wogegen das erste Seil die Seilkreuzungen des zweiten gleichartig gerade durchläuft und dort fixiert ist.

Mittels der gezielt vom Mittel abgehenden unterschiedlichen Seildistanzen zueinander von steuernden und gesteuerten Teilsegmenten kann durch Vergrößern oder Verkleinern und der daraus folgenden Verkippungen eine aerodynamisch optimierte Kurvencharakteristik festgelegt werden.

Bei der Endmontage in der Produktion werden beide Steuerseile in die vorgesehenen Halterungen eingeführt und bei gerade gestelltem Baum vorgespannt alle Klemmhalter fixiert. Ab nun kann der Rollreffbaum keine falsche Auslenkung, auch nicht durch ungleiche Krafteinwirkung von außen, ungewollt einnehmen. Wenn ein Teilsegment partiell gegenüber dem benachbarten verkippt wird, so nimmt der ganze Rollreffbaum die der Verkippung entsprechende charakteristische Kurvenform für das Segel ein, was die Betriebssicherheit erhöht und die Bedienung wesentlich vereinfacht, sodass auch ungeübte Segler unproblematisch ein großes Schiff erfolgreich beherrschen können.

Die obige Beschreibung gibt ziemlich breit die wichtigeren Merkmale der vorliegenden Offenbarung wieder, sodass die detaillierte Beschreibung, die nun folgt, zusätzliche Merkmale der Offenbarung enthält und dadurch besser verständlich ist.

Die Ausführungsformen der Offenbarung beschränken sich nicht auf die Details der Konstruktion, welche in der folgenden Beschreibung und den dargestellten Zeichnungen angeordnet sind. Es können andere Ausführungsformen im Rahmen der Erfindung praktiziert und auf verschiedene Arten ausgeführt werden. Außerdem versteht es sich, dass die verwendete Phraseologie und Terminologie nur zur Beschreibung und nicht als Beschränkung verwendet wird.

In Folge werden Ausführungsbeispiele der Erfindung anhand der Zeichnungen näher erläutert.

### Übersichtsliste der Zeichnungen

**Fig. 1** zeigt die Seitenansicht einer Ausführungsform eines erfindungsgemäßen Rollreffbaumes in einer Einsatzposition auf einem Schiff.
**Fig. 2** ist die Draufsicht auf den Rollreffbaum (1).
**Fig. 3** zeigt zwei erfindungsmäßig gegengleiche Profilgebungen des zugehörigen Segels.
**Fig. 4** zeigt den Querschnitt durch einen Rollreffbaum im Kippbereich gemäß der Erfindung.
**Fig. 5** ist die Seitenansicht im Schnitt durch die vertikale Kippebene im Bereich der Kipplager gemäß der Erfindung.
**Fig. 6** ist die Draufsicht im Schnitt "C-C" auf die Kipplagerverbindung gemäß der Erfindung.
**Fig. 7** zeigt eine Draufsicht auf die Schmalseite des erfindungsgemäßen Zugstranges (15 und 16) samt eingebundener Endterminals.
**Fig. 8** ist der Querschnitt C-D von Fig. 7.
**Fig. 9** zeigt eine verkürzte Darstellung der Zugspindel (41).
**Fig. 10** zeigt einen Teilschnitt und eine räumliche Darstellung des Wickeldorns (38).
**Fig. 11** ist eine schematische Draufsicht einer erfindungsgemäßen Geradstelleinrichtung (35).
**Fig. 12** ist eine schematische Darstellung der Zwangssteuereinrichtung gemäß der Erfindung.
**Fig. 13** zeigt eine mögliche Ausführung einer Klemmeinrichtung.
**Fig. 14** zeigt eine mögliche Ausführungsform einer Zwangssteuerung mit Verbindungsstangen (76).

### Beschreibung der Zeichnungen

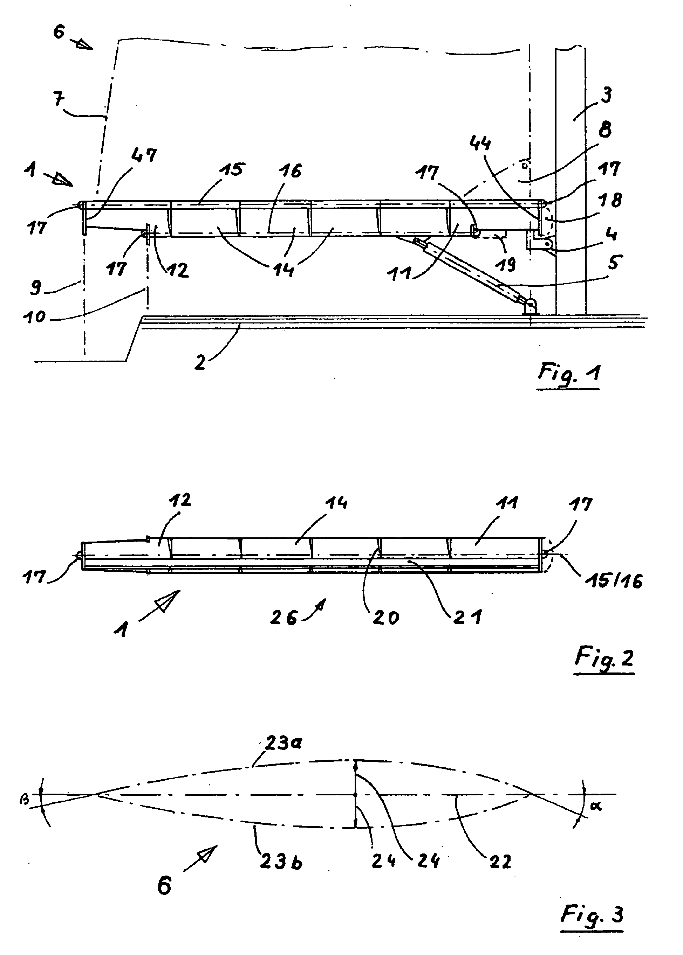

In **Fig. 1** ist ein erfindungsgemäßer Rollreffbaum (1) in einer möglichen Einsatzposition in Seitenansicht auf einem Schiff (2) hinter einem Mast (3) mit dem er durch einen Lümmelbeschlag (4) allseits auslenkbar verbunden ist und durch eine Baumstütze (5) in etwa waagrechter Lage und ca. 90° zum Mast (3) gehalten wird, um ein Ab- und Aufrollen des Segels (6) zu ermöglichen.

Man sieht über dem Rollreffbaum (1) ein angedeutetes Segel (6), das ausgerollt eine dargestellte mögliche Achterliekposition (7) und eingerollt einen Segelkopf (8) aufweist. Weiters sieht man eine mögliche Position einer Großschot (9) sowie eine zweite (10) alternativ, die den Segelzug nach oben auf das Schiff übertragen.

Der Rollreffbaum (1) besteht aus mehreren Teilsegmenten. Dem Kopfsegment (11), dem Nocksegment (12) und dazwischen mehrere gleichartige Mittelsegmente (14).

Strichpunktiert dargestellt ist die Mittellage des oberen Zugstranges (15) sowie die des etwas kürzeren unteren Zugstranges (16), die aufgrund ihrer Vorspannkraft ausreichende mechanische Festigkeit in vertikaler Richtung erbringen und weiters dargestellt sind deren verschraubbare Endterminals (17) als mechanische Fixierung am Kopfsegment (11) sowie am Nocksegment (12). Strichliert angedeutet ist die räumliche Lage einer möglichen am Kopfsegment (11) angebrachten Antriebseinheit (18), die vorzugsweise aus einem Elektroantrieb mit einem manuellen Notantrieb bei eventuellem Stromausfall ausgestattet ist, mit dem das Segel (6) ein- und ausrollbar angeordnet ist. Weiters strichliert angedeutet ist eine mögliche Lage des Geradestellantriebes (19), der ebenfalls elektrisch betrieben wird.

Die **Fig 2** ist eine Draufsicht auf den Rollreffbaum (1). Man sieht die Mittellinie des Rollreffbaumes (1) identisch mit den Zugsträngen (15 und 16) sowie die Endterminals (17), weiters die Teilfugen (20) zwischen dem Kopfsegment (11), den Mittelsegmenten (14) und dem Nocksegment (12), die aufgrund ihrer gegenseitigen Auslenkungswinkel Uberdeckungsbereiche der Segmentgehäuse (26) aufweisen.

Parallel zum oberen Zugstrang (15) verläuft die nach oben offene schlitzförmige Austrittsöffnung (21), durch die das Segel (6) am Mast (3) mittels des Großfalls (nicht gezeichnet), das am Segelkopf (8) befestigt ist heraus und am Mast (3) hochgezogen werden kann.

**Fig. 3** zeigt mögliche Profilgebungen eines Segels (6) das durch Auslenken eines Rollreffbaumes (1) geführt wird, welches gegenüber der dargestellten geraden Mittellinie (22) zu beiden Seiten gleich weit auslenkbar ist. Die Segelprofilkurve (23 a) hat ihre größte Profiltiefe (24) etwas vorlich der Mittellage in Fahrtrichtung gesehen, sodass die Segeltuchkrümmung zum Achterliek (7 in Fig. 1) hin abnimmt. Die Segelprofilkurve (23 b) ist bei gleicher Profiltiefe erfindungsgemäß gegengleich zu der Segelprofilkurve (23 a).

Im Zusammenspiel mit einem optimierbaren Anströmwinkel alpha und einen bestimmten kleineren Ausströmwinkel beta ist ein aerodynamisch optimierbares Segelprofil erreichbar, das bei allen möglichen justierbaren Profiltiefen (24) in seinen mechanisch vorfixierten Parametern erhalten bleibt.

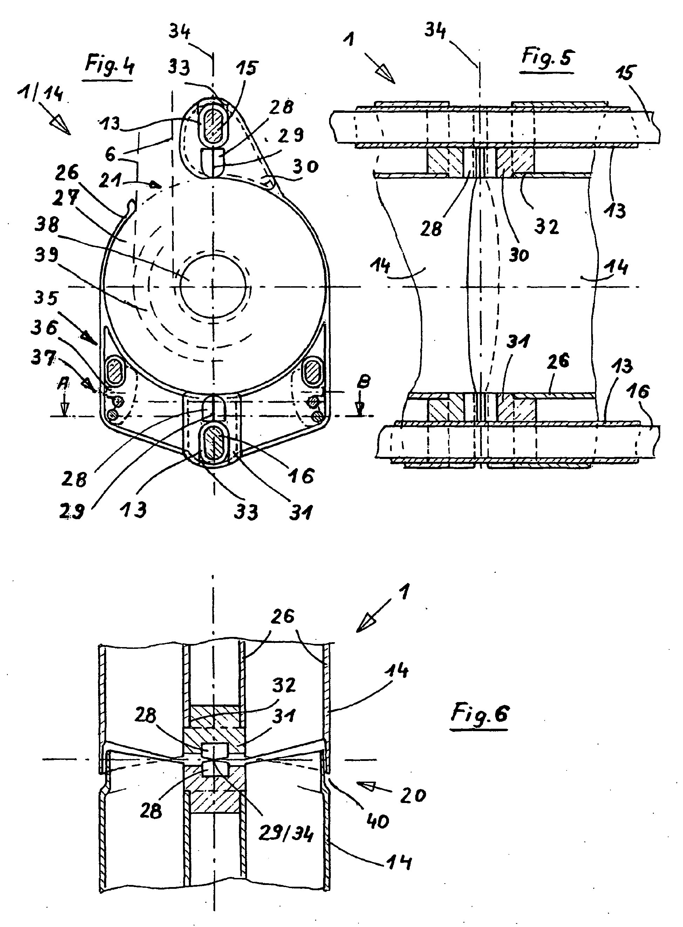

**Fig. 4** zeigt einen Querschnitt durch eine Rollreffanlage (1) durch eine Kippkantenebene zwischen zwei benachbarten Zwischensegmenten (14), die aus Fertigungsgründen alle gleichartig ausgeführt sind.

Man sieht eine mögliche Formgebung des Segmentgehäuses (26), das den etwa kreisrunden Segelbergeraum (27) bis auf die asymmetrische Austrittsöffnung (21) rohrförmig umschließt.

Oberhalb und unterhalb des Segelbergeraumes (27), genau in der vertikalen Mittelebene, befinden sich die Drucklagerpositionen, die je einen erfindungsgemäß ausgeformten Kipplagereinsatz (28) aus vorzugsweise Hartmetall aufweisen, deren gerundete längsseitige Kippkanten (29) im 90°-Winkel zur Längsachse des Rollreffbaumes (1) in der Vertikalebene angeordnet sind und eine Freistellung der Segmentgehäuse (26) innerhalb der ausgeformten Teilfugen (20 in Fig. 2 und 6) aufweist, die ein Auslenken von etwa 5 - 8° erlauben.

Jeder Kipplagereinsatz (28) ist zur Druckverteilung in ein oberes Druckstück (30) und ein unteres Druckstück (31) eingelassen. Die Druckstücke sind bevorzugter Weise aus aushärtbarem Aluminium druckgegossen, sie sind der Außenform des Segmentgehäuses (26) angeglichen sowie durch den Segelbergeraum (27) nach innen räumlich begrenzt und zentrieren sich durch in die Wandung des Segmentgehäuses (26) eingreifende Zentrieransätze (32 - in Fig. 5).

Die nach außen offene Ausnehmung (33) jedes Druckstückes (30) erlaubt die Montage mit dem oberen Zugstrang (15), der seinerseits verdickte Enden hat, durch seitliches Aufschieben und zentriert diesen ebenfalls in der Kippkantenlinie (34), wodurch sämtliche Segmentgehäuse (26) entlang des Zugstranges (15) einpositioniert werden.

Das untere Druckstück (31) mit analogem Aufbau ist des weiteren durch die nach unten erweiterte Außenform des Segmentgehäuses (26) begrenzt, die ihrerseits Zugstränge für die Geradstellungseinrichtung (35) umschließt, sowie die durch interne Klemmhalter (36) auf Längsseitenposition gehaltenen z.B. Seile aus rostfreiem Stahl der Zwangssteuerung (37), die unter dem Segelbergeraum (27) sich kreuzend unter Vorspannung verlaufen.

Die Austrittsöffnung (21) des Segelbergeraumes (27) ist vorteilig außermittig des Rollreffbaumes (1) angeordnet, sodass ein Segel (6), das über einen in etwa in der Mitte des Segelbergeraumes (27) sich drehenden Wickeldorns (38) aufgespult wird auch bei anwachsendem Durchmesser des Segelballens (39) möglichst reibungslos nach oben hindurch gezogen werden kann.

**Fig. 5** ist die Seitenansicht im Schnitt eines erfindungsmäßigen Rollreffbaumes im Bereich der Kippkantenlinie (34). Man sieht die durch alle Segmente des Rollreffbaumes (1) hindurch laufenden Zugstränge, den oberen (15) und den unteren (16). Sie haben aus Gründen der Vermeidung von Spitzenspannungen in den Biegestellen vorzugsweise eine UV-sichere gummiähnliche Ummantelung (13) und werden mit etwa 20 - 30 % ihrer Bruchdehnung bei der Endmontage vorgespannt.

Die durch den Segelbergeraum (27) vertikal maximal distanzierte erfindungsgemäße Anordnung von konzentriert übereinander gereihten Druck- und Zugelementen höchster Festigkeit, die dadurch eine erhöhte Biegesteifigkeit in Vertikalrichtung erbringen, ermöglichen gegenüber gebräuchlichen Produkten gewollte Gewichtsreduktionen bei Zuwachs an Sicherheit.

Die Zugkräfte der vorgespannten Zugstränge (15 und 16) werden in der vertikalen Ebene der Kippkantenlinien (34) durch die ausgeformten Hartmetallkipplagereinsätze (28) konzentriert aufgefangen, auf die Druckstücke (30 und 31) übertragen und großflächig verteilt in das Segmentgehäuse (26) eingeleitet.

In **Fig. 6** wird die Schnittführung A-B in Fig. 4 durch das untere Druckstück (31) dargestellt, in der man eine beidseitige Freistellung der gerundeten Kippkanten (29) in der Kippkantenlinie (34) des Kipplagereinsatzes (28) erkennen kann sowie die Einbettung dessen in das untere Druckstück (31), das seinerseits mittels Zentrieransätzen (32) im Segmentgehäuse (26) abgestützt und zentriert wird.

Um Verletzungen bei der Handhabung des Rollreffbaumes (1) zu vermeiden, werden seine beweglichen Teilfugen (20) durch eine Überlappung (40) überdeckt, dass bewusstes oder unbewusstes Berühren gefahrlos möglich ist.

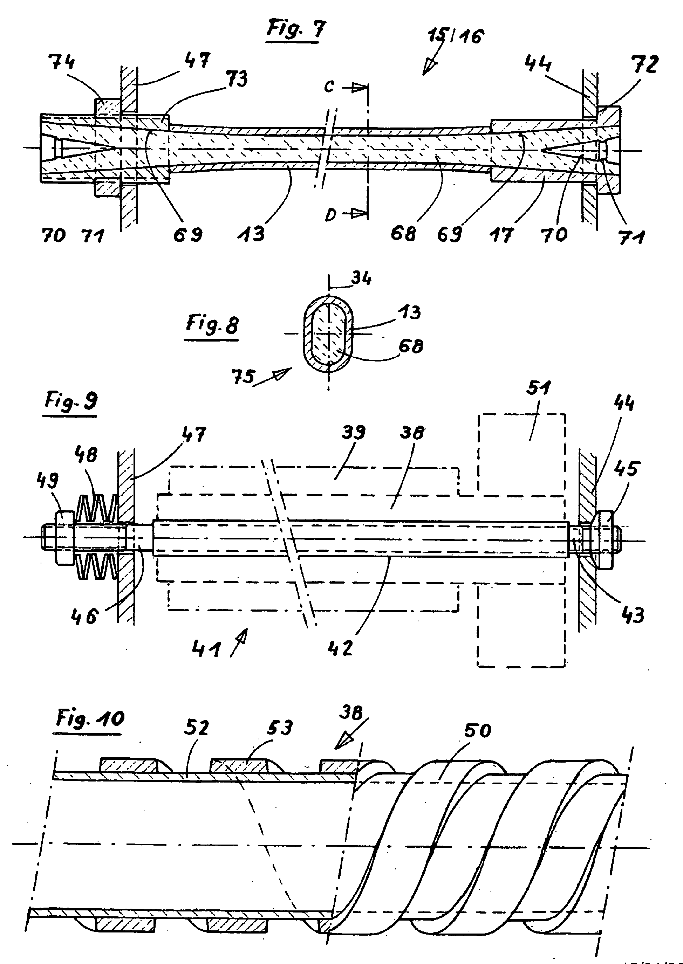

**Fig. 7** zeigt die Draufsicht auf eine bevorzugte Ausführungsform des oberen Zugstranges (15) bzw. des unteren (16) im Schnitt, bestehend aus einem unidirektionalen Strang aus hochfestem biegsamen Faserplast (68) vorbestimmter Länge, der mit einer Ummantelung (13) aus UV-sicherem gummiähnlichem Material umgeben ist.

Der Strang aus Faserplast (68) durchläuft in voller Stärke ein ausgeformtes Endterminal (17) vorzüglich aus Edelstahl, das an der engsten Stelle der konischen Kontaktfläche (69) den kleinsten Durchmesser aufweist, der in der Produktion das Einziehen des mit Harz vorgetränkten Faserplaststranges (68) vorgegebener Stärke zulässt.

Die Querschnittsvergrößerung der Kontaktfläche (69) zum Außenende zu wird durch den von außen eingeschobenen Gegenkegel (70) ähnlicher Volumsverdrängung weitgehendst kompensiert, sodass nach dem Aushärten des Faserplaststranges (68) das Terminal (17) nicht mehr nach außen abgezogen werden kann. Zur ortsfesten Fixierung des Gegenkegels (70) ist dieser mit Hinterdrehungen (71) versehen. Das gedrehte Endterminal (17) hat am Außenende einen hervorstehenden Anschlagbund (72), der am Außenende der Kopfstation (11) in die Abschlussplatte (44) kraftschlüssig einhängbar ist.

Um die Zugstränge (15 bzw. 16) erfindungsgemäß vorspannen zu können, ist jeweils das andere Endterminal mit feinem Außengewinde (73) vorgesehen, das mittels einer Spannmutter (74), die am Nocksegment (12) in der nockseitigen Abschlussplatte (47) gegengelagert ist, auf entsprechende Vorspannung gebracht werden kann. Die Einbindung des Endterminals mit feinem Außengewinde (73) mit dem Faserplaststrang (68) erfolgt auf gleiche Weise wie beim Endterminal (17).

Die komplette Länge des Faserplaststranges (68) zwischen den Endterminals (17 und 73) ist mit einer gummiartigen Ummantelung (13) aus vorzugsweise UV-sicherem Gewebeschlauch umgeben, der bei der Produktion als verlorene Form beim Flachpressen des Stranges (68) fungiert, andererseits in funktionsfähiger Einbaulage den notwendigen Schutz gegen jegliche mechanische Beschädigung gewährleistet und partielles Abknicken im Bereich der Kippkantenlinie (34 in Fig. 8) bei großer Auslenkung der Teilsegmente des Rollreffbaumes (1) abpolstert und so Spitzenspannungen verhindert.

In **Fig. 8** ist der Schnitt C-D der Fig. 7 des Stranges aus Faserplast (68) in einer vorteilig flachgedrückten Querschnittsform zu sehen, die für die notwendige erfindungsgemäße Biegefreudigkeit der Zugstränge (15 und 16) maßgebend ist. Alle Kippkantenlinien (34) durchlaufen in Einbaulage die Querschnittsform (75) des Stranges (68) in Längsrichtung, sodass deren neutrale Biegefaser inmitten des schmalseitigen Querschnittes (75) mit der Kippkantenlinie (34) jeweils zusammenfällt und die Auskippkraft für den Rollreffbaum (1) minimiert, wie es bei Schwachwind im Einsatz notwendig ist.

Die Übergänge des Faserplaststranges (68) vom Rundquerschnitt innerhalb der konischen Kontaktfläche (69 in Fig. 7) zur flachgedrückten Querschnittsform (75) erfolgt jeweils in einer angemessenen Ubergangsstrecke, um den Kraftfluss innerhalb des Faserstranges sanft umzuleiten.

**Fig. 9** zeigt eine durch Abbruchlinien verkürzte Darstellung der Zugspindel (41), die aus einem vorzugsweise dünnem Edelstahlrohr (42) besteht, das an einem Ende einen eingeschweißten Gewindezapfen (43) aufweist, der durch die kopfseitige Abschlussplatte (44) verdrehgehindert hindurch reicht und von außen allseits geringfügig verschwenkbar durch eine ballig geformte Mutter (45) axial fixiert ist.

Auf der längsseits gegenüberliegenden Seite des Edelstahlrohres (42) ist ein längerer Gewindezapfen (46) eingeschweißt, der durch die nockseitige Abschlussplatte (47) hindurchreicht und eine gewisse Anzahl von Tellerfedern (48) mittels der Vorspannmutter (49) unter ausreichende Spannung versetzt, um den um ihn umlaufenden Wickeldorn (38) (strichliert gezeichnet) beim Ein- und Ausreffen des Segels (6) zu zentrieren, was nur bei Geradestellung des Rollreffbaumes (1) geschieht.

Der biegsame Wickeldorn (38) ist in direkter Verbindung mit der kopfseitigen Antriebseinheit (51), die gemeinsam axial und radial auf der Zugspindel (41) in mehreren Abständen leichtgängig gelagert ist, verbunden, wobei das Antriebsdrehmoment auf die kopfseitige Abschlussplatte (44) übertragen wird (nicht gezeichnet).

Nach dem Ein- oder Ausreffen im gerade gestellten Zustand des Rollreffbaumes (1) nimmt dieser im Einsatz neuerlich eine Profil gebende Auslenkung ein, die den Wickeldorn (38) samt eines möglichen aufgespulten Segelballens (39) (strichpunktiert gezeichnet) und der mit ihm verbundenen Antriebseinheit (51) in eine durch den Segelbergeraum (27 in Fig. 4) begrenzte und durch die vorgespannte Zugspindel (41) zentrierte Betriebslage einmittelt.

**Fig. 10** zeigt einen Teilschnitt eines möglichen strukturellen Aufbaues des erfindungsgemäßen Wickeldornes (38), sowie ein Teilstück in Seitenansicht, in dem das vorzugsweise zweigängige trapezgewindeähnliche Oberflächenprofil (50) in räumlicher Ansicht zu sehen ist.

Dargestellt ist das Trägerrohr (52), das im GFK-Wickelverfahren ausreichend biegsam und im Durchmesser sehr formsteif gefertigt werden kann und der dieses Rohr umschlingende Gewindekörper (53) die miteinander fest verbunden sind. Die erforderliche Torsionssteifigkeit und bevorzugte Drehrichtung entsteht durch die hohe Zugfestigkeit der flach gewickelten Umschlingungen der Gewindekörper (53) über den weitgehendst inkompressiblen Durchmesser des Trägerrohres (52). Die Drehrichtung der Beanspruchung ist daher vorteilig derartig einzuhalten, dass der umschlingende Gewindekörper (53) auf Zug beansprucht wird und das Trägerrohr (52) auf Zusammendrücken.

In **Flig. 11** ist eine schematische Draufsicht einer erfindungsgemäßen Geradstellungseinrichtung (35) eines Rollreffbaumes (1), der mittels seiner über die Kippachsen (29) auslenkbaren Teilsegmente einen möglichen Kurvenverlauf eingenommen hat in z.B. größtmöglicher Auslenkung.

Dargestellt sind mit dem Kopfsegment (11) ortsfest verbunden ein elektrischer Kleingetriebemotor (55) mit gänzlich ausgefahrener Gewindespindel, an deren Ende ein biegsamer ummantelter Zugstrang (56) der Geradstellungseinrichtung (35) fix verbunden ist, der innerhalb der Segmentgehäuse (26 in Fig. 4) durch interne Klemmhalter (36 in Fig. 4) längsverschiebbar in der strichliert gezeichneten Außenkurve innerhalb des Rollreffbaumes (1) gehalten wird.

Der biegsame Zugstrang (56) durchläuft eine Halterungsöse (57), die am anschließenden Ende des Nocksegmentes (12) zu beiden Seiten ortsfest vorhanden ist und endet dort mit einen am Zugstrang (56) fixierten Endterminal (58) als Endanschlag. Der an der verkürzten Innenseite befindliche Kleingetriebemotor (59) treibt eine analog gegengleiche Anordnung benannter Bauelemente an, sodass bei ausgefahrener Zugspindel eine Längsverschiebung des biegsamen Zugstranges (56) innerhalb der Segmentgehäuse (26 in Fig. 4) erfolgt und die Differenzlänge beider Zugstränge (56) im Kurvenverlauf als steuerbarer Hub (60) den biegsamen Zugstrang (56) aus der Halterungsöse (57) des Nocksegmentes (12) hervorstehen lässt.

Wenn beide Spindeln der Kleingetriebemotoren (55 und 59) auf volle Länge ausgefahren sind, ist der Rollreffbaum (1) in beide horizontalen Richtungen voll auslenkbar, was durch den Winddruck des Segels (6) erfolgt.

Vor jedem Reffvorgang werden die Gewindespindeln beider Kleingetriebemotoren (55 und 59) im elektrisch zusammen geschalteten Zustand gleichermaßen verkürzt, bis beide Zugstränge (56) auf gleicher Spannung sind und der Rollreffbaum (1) sich einmittelt und gerade stellt.

Ein mögliches Justieren der Geradstellung oder das bewusste Einstellen eines einseitigen Profiles kann durch elektrisch getrennte Einzelschaltung des Kleingetriebemotors (55) z.B. auf Ausfahren und des gegenüberliegenden (59) auf Einzug geschehen.

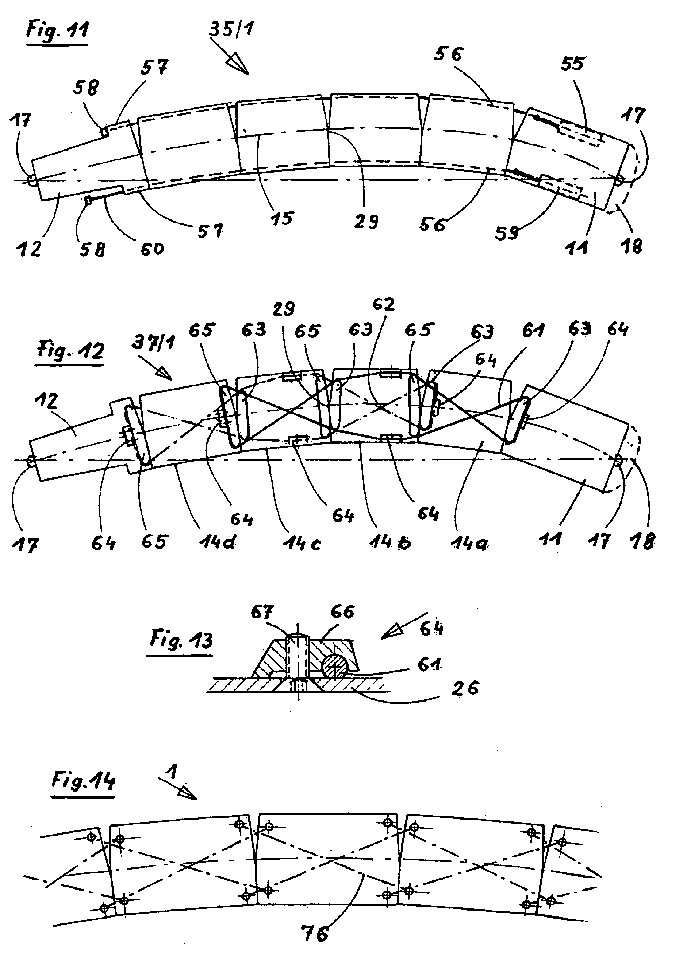

**Fig. 12** zeigt eine bevorzugte Ausführung einer erfindungsgemäßen Zwangssteuerung (37) in einer schematischen Darstellung als Draufsicht auf einen Rollreffbaum (1).

Man sieht die Außenkontur des Rollreffbaumes (1), der über seine Kippachsen (29) seiner beispielsweise sechs gezeigten ausschwenkbaren Teilsegmente einen möglichen zwangsgesteuerten Kurvenverlauf eingenommen hat. Zu sehen ist der kreuzende Verlauf von den bevorzugter Weise eingesetzten Seilen aus rostfreiem Stahl der Zwangssteuerung (37) unterhalb des Segelbergeraumes (27 in Fig. 4).

Um alle Segmente in die zueinander vorgesehene Auslenkung zu zwingen, sind zwei getrennte Seilstränge vorgesehen, die jeweils mit jedem übernächsten Segment in gekreuzter Seilverbindung stehen.

Der erste Seilstrang (61) ist in seiner halben Länge auf einem internen Distanzhalter klein (63) des Kopfsegmentes (11) durch einen Klemmhalter (64) fixiert und durchläuft frei gespannt das Mittelsegment (14 a) in sich kreuzender Weise mit seinen beiden Enden, die am Außenende des Distanzhalters groß (65) des Mittelsegmentes (14 b) unter Spannung anliegen und mit einem Klemmhalter (64) innerhalb der Außenwand des Mittelsegmentes (14b) fixiert werden.

Die weitergeführten Seilenden liegen in Folge am Distanzhalter klein (63) an und führen in weiterer gekreuzter Form an die Außenenden des Distanzhalters groß (65) des Mittelsegmentes (14d), wo der erste Seilstrang (61) unter Vorspannung mittels Klemmhalter (64) fixiert endet.

Der zweite Seilstrang (62 - strichpunktiert dargestellt) ist ebenfalls mittig auf dem Distanzhalter klein (63) des Mittelsegmentes (14 a) durch einen Klemmhalter (64) fixiert, er durchläuft frei gespannt das anschließende Mittelsegment (14 b) in kreuzender Form und liegt am Distanzhalter groß (65) des Mittelsegmentes (14 c) an, in dem es ebenfalls an jeder Innenseite der Außenwand mittels Klemmhalter (64) fixiert über den Distanzhalter klein (63) geleitet und über Kreuz am Distanzhalter groB (65) des Nocksegmentes (12) mittels Klemmhalter (64) vorgespannt fixiert wird. Bei einer Auslenkung eines z.B. Mittelsegments gegenüber einem anderen, steuern alle im mechanisch festgelegten Verhältnis mit.

Es steuern durch die gekreuzten Seile, die in der Auslenkungskurve außen liegenden Enden der Distanzhalter klein (63) jeweils die in der Innenkurve liegenden Enden der Distanzhalter groß (65) eine bestimmte zum Nocksegment (12) hin nach Bedarf flacher werdende charakteristische Kurvenform, die als vorfixiert im Rollreffbaum (1) erfindungsgemäß erhalten bleibt. Es ist somit der Ort der jeweils größten Profiltiefe aller möglichen frei einstellbaren Profiltiefen festgelegt, diese kann als Endbegrenzung von null bis maximal durch die Geradstellungseinrichtung (35 in Fig. 11) je nach Windstärke einjustiert werden.

Wenn nun alle Distanzhalter groß (65) des Rollreffbaumes (1) in ganz bestimmten Maßen größer als die Distanzhalter klein (63) ausgeführt werden, kann eine gewünschte Profil gebende Kurve nach aerodynamischen Gesichtspunkten für das Segel (6) im Rollreffbaum (1) realisiert werden.

**Fig. 13** zeigt eine mögliche Ausführungsform eines üblichen Klemmhalters (64), der mittels einer oder mehreren Senkkopfschrauben (67), die durch das Segmentgehäuse (26) hindurchreichen, eine mit entsprechenden Gewinden ausgestattete Formplatte (66) an die Innenseite des Segmentgehäuses (26) anpresst und den dazwischen liegenden Seilstrang (61) fixiert.

**Fig. 14** zeigt eine mögliche Ausführungsform einer Zwangssteuerung des Rollreffbaumes (1), die auf gleiche Weise funktioniert, jedoch beispielsweise angelenkte Verbindungsstangen (76) auf Zug und Druck verwendet, die auch jedes zweite Teilsegment miteinander kreuzend verbinden, sodass die gegenseitigen Auslenkungen in beide horizontale Richtungen nur nach der kraftschlüssig vorfixierten Profilcharakteristik durch den Winddruck des Segels (6) möglich sind.

## Patentansprüche

1. Rollreffbaum für ein mit Segellatten ausgesteiftes Baumsegel, vorzugsweise ein Großsegel, eines Schiffes mit einem teilweise umschließenden in etwa kreisrunden Segelbergeraum aus Aluminium oder Faserplast, in den ein Segel durch Aufrollen gerefft oder geborgen werden kann, **dadurch gekennzeichnet, dass** der Rollreffbaum (1) aus einem Kopfsegment (11), einem Nocksegment (12) und aus mehreren Zwischensegmenten (14) besteht, die in horizontaler Ebene gegeneinander verkippbar sind und jeweils in Längsrichtung einen anteiligen ausgebildeten Segelbergeraum (27) einschließen.

2. Rollreffbaum nach Anspruch 1 **dadurch gekennzeichnet, dass** in der vertikalen Mittelebene über- und unterhalb des Segelbergeraums (27) des Rollreffbaumes (1) innerhalb der Segmentgehäuse (26) Zugstränge (15 und 16) vorgespannt verlaufen, die die Mittelsegmente (14) geführt durch die Druckstücke (30 und 31) an ihren jeweiligen Außenenden durchlaufen und am Kopfsegment (11) sowie am Nocksegment (12) befestigt sind und in dieser Ebene einen biegesteifen Zusammenhalt bilden.

3. Rollreffbaum nach einem der Ansprüche 1 und 2 **dadurch gekennzeichnet, dass** oberhalb und unterhalb des Segelbergeraumes (27) bei allen gegenseitigen Berührungsstellen der Segmentgehäuse (26) in der vertikalen Mittelebene druckfeste Kipplagereinsätze (28) aus vorzugsweise Hartmetall mit hervorstehenden gerundeten Kippkanten (29) längs der Kippkantenlinie (34) eingelassen in Druckstücke (30 und 31) aus vorzugsweise Hartaluminium im Segmentgehäuse (26) ortsfest gehaltert sind, und die Teilfuge (20) zum horizontalen Verkippen der Segmentgehäuse (26) zueinander freistellen.

4. Rollreffbaum nach einem der Ansprüche 1 bis 3 **dadurch gekennzeichnet, dass** die Druckstücke (30 und 31) eine nach außen hin offene Ausnehmung (33) aufweisen, deren Breite und Form der aufzunehmenden Querschnittsform (75) der Zugstränge (15 und 16) entspricht.

5. Rollreffbaum nach einem der Ansprüche 1 bis 4 **dadurch gekennzeichnet, dass** in etwa seitlich des Segelbergeraumes (27) innerhalb einer Gehäuseerweiterung nach unten zwei biegsame elastisch ummantelte Zugstränge (56) aus vorzugsweise Faserplast auf gegenüberliegenden Seiten der Segmente (14) diese in Längsrichtung durchlaufend und längsverschiebbar mechanisch geführt sind, deren Einbau- und Funktionsebene im 90<Winkel zu den Kippkanten (34) liegt und deren Enden mittels Endterminal (58) und vorzugsweise Zugspindeln am anderen Ende unter Zug gebracht werden können.

6. Rollreffbaum nach einem der Ansprüche 1 bis 5 **dadurch gekennzeichnet, dass** die aufeinander folgenden Segmentgehäuse (26) unterhalb des Segelbergeraumes (27) innerhalb der Gehäuseerweiterung mit zwei getrennten Zugsträngen (61 und 62) aus vorzugsweise rostfreien Stahlseilen der Zwangssteuerung (37) durchsetzt sind, wobei eines über interne Distanzhalter klein (63) durch frei gespannte sich kreuzende Seilverbindungen ein jeweils übernächstes Segmentgehäuse (26) mittels des dortigen Distanzhalters groß (65) in zugschlüssiger Verbindung stehen und die jeweils dazwischen liegenden Segmentgehäuse (26) auf je einer Seitenwand festgeklemmt durchlaufen, in der das zweite Seil die jeweils gekreuzte Form einnimmt und in analoger Führung den Rest der Segmentgehäuse (26) miteinander verbindet.

7. Rollreffbaum nach einem der Ansprüche 1 bis 6 **dadurch gekennzeichnet, dass** der obere Zugstrang (15) bzw. der untere (16) in bevorzugter Weise aus einem Strang aus Faserplast (68) bestehen, der mindestens im zu biegenden Bereich eine flachgedrückte Querschnittsform (75) aufweist, deren schmalseitige neutrale mittige Biegelinie parallel zu den Kippkantenlinien (34) des Rollreffbaumes (1) verlaufen mit fließenden Übergängen zu den konischen Kontaktflächen (69) der Endterminals (17 und 73) vorzugsweise aus Edelstahl, die in den Strang aus Faserplast (68) samt dem Gegenkegel (70) eingebunden sind und der gesamte Strang zwischen den Endterminals (17 und 73) mit einer gummiähnlichen Ummantelung (13) umgeben ist.

8. Wickeldorn aus Faserplast für einen Rollreffbaum nach einem der Ansprüche 1 bis 7 **dadurch gekennzeichnet, dass** der Wickeldorn (38) etwa zur Hälfte des Gewichtes aus einem biegsamen, im Durchmesser formsteifen Trägerrohr (52) und etwa zur Hälfte fix verbunden mit einem umschlingenden hochfesten Gewindekörper (53) in Form eines zwei- oder dreigängigen trapezgewindeähnlichen Oberflächenprofils (50) mit etwa 50 % an Freistellungsfläche besteht.

9. Wickeldorn aus Faserplast nach Anspruch 8 **dadurch gekennzeichnet, dass** zwischen den zueinander verkippbaren Abschlussplatten (44 und 47) des Rollreffbaumes (1) eine runde Zugspindel (41) aus vorzugsweise einem dünnen Edelstahlrohr vorhanden ist, mit einem Gewindezapfen (43) einer ballig geformten Mutter (45) verschwenkbar durch die Abschlussplatte (44) axial fixiert ist und am anderen Ende einen längeren Gewindezapfen (46) aufweist, der durch die nockseitige Abschlussplatte (47) hindurch reicht und mit der Vorspannmutter (49) eine Anzahl platzierter Tellerfedern auf Spannung bringt.

## Claims

1. Roller reefing boom for a boom sail stiffened with sail battens, preferably a mainsail, of a vessel with a partially enclosing, substantially circular sail stowage space which is made of aluminium or fibre reinforced plastic and in which a sail can be reefed or stowed by rolling it up, **characterised in that** the roller reefing boom (1) consists of a head segment (11), a yardarm segment (12) and of a plurality of intermediate segments (14) which are tiltable relative to one another in the horizontal plane and each enclose in the longitudinal direction a fractional formed sail stowage space (27).

2. Roller reefing boom according to claim 1, **characterised in that** tension strands (15 and 16), which pass through the centre segments (14), guided by the pressure pieces (30 and 31) at their respective outer ends, and are fastened to the head segment (11) and also to the yardarm segment (12) and form in this plane a flexurally rigid cohesion, run in a prestressed manner in the vertical centre plane above and below the sail stowage space (27) of the roller reefing boom (1) within the segment housings (26).

3. Roller reefing boom according to one of claims 1 and 2, **characterised in that** pressure-resistant tilting bearing inserts (28) made of preferably carbide with protruding rounded tilting edges (29) along the tilting edge line (34), sunk into pressure pieces (30 and 31) made of preferably hard aluminium in the segment housing (26), are stationarily mounted above and below the sail stowage space (27) at all the mutual contact points of the segment housings (26) in the vertical centre plane and clear the joint (20) for horizontally tilting the segment housings (26) relative to one another.

4. Roller reefing boom according to one of claims 1 to 3, **characterised in that** the pressure pieces (30 and 31) have an outwardly open recess (33), the width and shape of which correspond to the cross-sectional shape (75) to be received of the tension strands (15 and 16).

5. Roller reefing boom according to one of claims 1 to 4, **characterised in that** there are mechanically guided, substantially laterally of the sail stowage space (27) within a housing extension downward, two flexible resiliently sheathed tension strands (56) made of preferably fibre reinforced plastic on opposing sides of the segments (14), in a longitudinally displaceable manner and so as to pass through said segments in the longitudinal direction, the installation and functional plane of which lies at a 90° angle in relation to the tilting edges (34) and the ends of which can be brought under tension by means of an end terminal (58) and preferably tension spindles.

6. Roller reefing boom according to one of claims 1 to 5, **characterised in that** the successive segment housings (26) are interspersed, below the sail stowage space (27) within the housing extension, with two separate tension strands (61 and 62) made of preferably stainless steel cables of the positive control (37), wherein of a [...] via internal spacers small (63) by freely stressed intersecting cable connections, a respectively next-but-one segment housing (26) are connected by tension engagement by means of the spacer large (65) provided there and pass in a securely clamped manner through the segment housings (26) respectively positioned therebetween on a respective side wall in which the second cable assumes the respectively crossed shape and connects the remainder of the segment housings (26) to one another in similar guidance.

7. Roller reefing boom according to one of claims 1 to 6, **characterised in that** the upper tension strand (15) or the lower tension strand (16) consist in a preferred manner of a strand which is made of fibre reinforced plastic (68) and has, at least in the region to be bent, a cross-sectional shape (75) which is pressed flat and the narrow-side neutral central bending line of which runs parallel to the tilting edge lines (34) of the roller reefing boom (1) with fluid transitions to the conical contact surfaces (69) of the end terminals (17 and 73) which are preferably made of high-grade steel and are incorporated into the strand made of fibre reinforced plastic (68) along with the mating cone (70), and the entire strand between the end terminals (17 and 73) is surrounded by a rubber-like sheathing (13).

8. Winding mandrel made of fibre reinforced plastic for a roller reefing boom according to one of claims 1 to 7, **characterised in that** the winding mandrel (38), for roughly half its weight, consists of a flexible carrier tube (52) which is dimensionally stable in diameter and, for roughly half, is fixedly connected to a looping high-strength threaded body (53) in the form of a two or three-start trapezoidal thread-like surface profile (50) with approximately 50 % of clearance area.

9. Winding mandrel made of fibre reinforced plastic according to claim 8, **characterised in that** between the closure plates (44 and 47), which are tiltable relative to each other, of the roller reefing boom (1) a round tension spindle (41) consisting of preferably a thin high-grade steel tube is present, is axially fixed by the closure plate (44) so as to be pivotable with a threaded journal (43) of a spherically shaped nut (45) and has at the other end a longer threaded journal (46) which reaches through the yardarm-side closure plate (47) and stresses with the prestressing nut (49) a number of positioned plate springs.

## Revendications

1. Bôme enrouleuse pour une voile de bôme rigidifiée par des lattes de voile, de préférence une grand-voile d'un voilier ayant une chambre d'enroulement de section sensiblement circulaire, partiellement enveloppante, en aluminium ou en matière plastique renforcée par des fibres, recevant la voile enroulée ou regroupée,
bôme enrouleuse (1) **caractérisée en ce qu'**
elle se compose d'un segment de tête (11), d'un segment d'extrémité (12) et de plusieurs segments intermédiaires (14) qui peuvent basculer l'un par rapport à l'autre dans le plan horizontal et qui comportent chacun dans la direction longitudinale, une chambre d'enroulement (27), adjacente.

2. Bôme enrouleuse selon la revendication 1,
**caractérisée en ce que**
des cordons de traction (15, 16) précontraints passent dans le plan médian vertical au-dessus et en dessous de la chambre d'enroulement (27) de la bôme enrouleuse (1), dans le segment de boîtier (26), en traversant les segments intermédiaires (14) par des pièces de pression (30, 31) à leurs extrémités extérieures respectives et le segment de tête (11) et le segment d'extrémité (12) en constituant une réunion rigide en flexion dans ce plan.

3. Bôme enrouleuse selon l'une des revendications 1 et 2,
**caractérisée en ce qu'**
au-dessus et en dessous de la chambre d'enroulement (27), pour tous les points de contact réciproques des segments de boîtier (26) dans le plan médian vertical, il y a des inserts de basculement (28), résistant à la pression, ces inserts étant de préférence en métal dur avec des arêtes de basculement (29), de préférence arrondies en saillie, le long de la ligne de basculement (34) intégrée dans les pièces de pression (30, 31), de préférence en aluminium dur, tenues de manière fixe dans le segment de boîtier (26) et dégageant le joint d'assemblage (20) pour le basculement horizontal des segments de boîtier (26).

4. Bôme enrouleuse selon l'une des revendications 1 à 3,
**caractérisée en ce que**
les pièces de pression (30, 31), ont une cavité (33) ouverte vers l'extérieur dont la largeur et la forme correspondent à la forme de la section (75) des cordons de traction (15 et 16), à recevoir.

5. Bôme enrouleuse selon l'une des revendications 1 à 4,
**caractérisée en ce que**
sensiblement latéralement à la chambre d'enroulement (27), dans une extension du boîtier vers le bas, il y a deux cordons de traction (56) souples, gainés de manière élastique, de préférence en matière plastique chargée de fibres sur les côtés opposés des segments (14) en étant guidés dans la direction longitudinale de manière continue et de façon à coulisser longitudinalement par un guidage mécanique dont le plan de montage et de fonctionnement fait un angle de 90° par rapport aux arêtes de basculement (34) et dont les extrémités sont mises en traction par des pièces d'extrémité (58) et de préférence des broches de traction au niveau de l'autre extrémité.

6. Bôme enrouleuse selon l'une des revendications 1 à 5,
**caractérisée en ce que**
les segments de boîtier (26), successifs, sous la chambre d'enroulement (27), sont traversés à l'intérieur de l'extension de boîtier, par deux cordons de traction (61, 62), séparés, de préférence des câbles d'acier inoxydable de la commande forcée (37), et
l'un des cordons passant sur des petits organes d'écartement (63) internes par des liaisons câblées qui se croisent en étant tendues librement, dans chaque second segment de boîtier (26), en étant en liaison de traction avec le grand organe d'écartement (65) correspondant et les segments de boîtier (26) intermédiaires, sont traversés en pinçant chaque paroi latérale, le second cordon prenant une forme chaque fois croisée et en reliant avec un guidage analogue, le restant des segments de boîtier (26).

7. Bôme enrouleuse selon l'une des revendications 1 à 6,
**caractérisée en ce que**
le cordon de traction supérieur (15) ou le cordon de traction inférieur (16) sont de préférence constitués par un cordon de matière plastique renforcée de fibres (68) ayant une forme de section (75) aplatie au moins dans la zone de flexion et dont la ligne de flexion centrale neutre du petit côté, est parallèle à la ligne de basculement (34) de la bôme enrouleuse (1) avec des transitions continues vers les surfaces de contact conique (69) des pièces d'extrémité (17 et 73), de préférence en acier inoxydable intégrées dans le cordon de matière plastique renforcée de fibres (68) avec le contrecône (70) et l'ensemble du cordon est entouré d'une gaine (13) analogue à du caoutchouc entre les bornes d'extrémité (17 et 73).

8. Broche d'enroulement en matière plastique renforcée de fibres pour une bôme enrouleuse selon l'une des revendications 1 à 7,
**caractérisée en ce que**
la broche d'enroulement (38) est sensiblement pour la moitié du poids, formée par un tube de support (52) susceptible de fléchir mais dont le diamètre est de forme rigide et pour sensiblement la moitié elle est relié de manière solidaire à un corps fileté (53) très résistant, enveloppant, sous la forme d'un profilé de surface (50) à deux ou trois filets à section trapézoïdale avec une surface dégagée de l'ordre de 50 %.

9. Broche d'enroulement en matière plastique renforcée par des fibres selon la revendication 8,
**caractérisée en ce qu'**
entre les plaques terminales (44, 47) basculant l'une par rapport à l'autre de la bôme enrouleuse (1), il y a une broche de traction (41), ronde, de préférence en un tube d'acier inoxydable mince fixé axialement de manière pivotante à travers la plaque terminale (44) avec un goujon fileté (43) d'un écrou bombé (45) et l'autre extrémité comporte un goujon fileté (46), allongé, traversant la plaque d'extrémité (47) côté extrémité de la bôme en étant mis en tension par un écrou de précontrainte (49) et un certain nombre de ressorts Belleville interposés.
